# EUROPÄISCHE PATENTSCHRIFT

(11) **EP 3 266 406 B1**
(45) Veröffentlichungstag und Bekanntmachung des Hinweises auf die Patenterteilung: **04.03.2020**
(21) Anmeldenummer: 16177788.3
(22) Anmeldetag: 04.07.2016
(51) Int. Cl.: A61C 3/02, A61C 3/06

(54) **DENTALINSTRUMENT**
DENTAL INSTRUMENT
INSTRUMENT DENTAIRE

(43) Veröffentlichungstag der Anmeldung: 10.01.2018
(73) Patentinhaber: Coltène/Whaledent AG, 9450 Altstaetten (CH)
(72) Erfinder: Kollefrath, Ralf, 9464 Ruethi (CH); Müller, Ulrich, 9434 Au (CH); Schlüter, Martin, 88238 Wangen i.A. (DE)
(74) Vertreter: Hepp Wenger Ryffel AG

(56) Entgegenhaltungen:
- EP-A1- 2 578 180
- WO-A1-92/07664
- DE-A1-102014 212 448
- DE-U1-202005 005 701
- US-A- 3 762 882

## Beschreibung

Die vorliegende Erfindung betrifft ein Dentalinstrument umfassend einen Schaft und ein daran anschliessendes Arbeitsteil, ein Verfahren zum Beschichten eines Arbeitsteils zur Herstellung eines Dentalinstrumentes sowie die Verwendung eines Dentalinstrumentes zur spanabhebenden Bearbeitung eines Objektes nach den Oberbegriffen der unabhängigen Ansprüche.

In diesem Zusammenhang wird die WO 92/07664 A1 genannt.

Rotierende Dentalinstrumente sind unterschiedlich gestaltete Werkzeuge, die in zahnärztliche Winkel-, Handstücke oder Turbinen eingespannt werden. Darüber hinaus kommen derartige Instrumente auch in der Zahntechnik in Verbindung mit den dort gebräuchlichen Handstücken zum Einsatz. Sie setzen sich aus einem eigentlichen Arbeitsteil und einem Schaft zusammen, welcher der Befestigung und dem Antrieb des Arbeitsteils dient. Je nach vorgesehenem Verwendungszweck können sowohl der Schaft als auch das Arbeitsteil unterschiedliche Formen haben oder aus verschiedenen Materialien hergestellt sein. Wichtige Merkmale für die Qualität derartiger Dentalinstrumente sind neben deren schärfe bzw. Materialhärte auch deren Rundlaufgenauigkeit. Sie können zum einmaligen oder zum mehrmaligen Gebrauch vorgesehen sein, wobei gerade bei wiederholtem Gebrauch auch die Langlebigkeit ein wichtiges Qualitätsmerkmal ist.

Als Materialien für die Arbeitsteile kommen je nach Verwendungszweck Stahl, Hartmetall, Diamant, Keramik oder elastische Polymere zum Einsatz. Insbesondere diamantierte Instrumente haben sich in der Zahnheilkunde seit Jahrzehnten durchgesetzt. Diese werden in erster Linie zur Bearbeitung des Zahnschmelzes, also bei der Präparation von Zähnen zur Versorgung mit Zahnkronen oder Füllungen, eingesetzt. Dort kommen derartige Dentalinstrumente in Kombination mit zahnärztlichen Turbinen und speziellen, schnelllaufenden Winkelstückköpfen zum Einsatz. Allerdings werden sie auch in der Dentaltechnik, insbesondere zur Bearbeitung von besonders harten Werkstücken aus Keramik, eingesetzt.

Siegel und Fraunhofer geben in ihrem Artikel *"*Dental cutting: The historical development of dental burs" im Journal of the American dental Association (1939), Ausgabe 129, 1998, Seiten 740-745 einen historischen Überblick über die Entwicklung diamantierter Dentalinstrumente. Demnach umfassen derartige Instrumente üblicherweise einen Kern aus rostfreiem Stahl, welcher mit einer Beschichtung aus Nickel überzogen ist, in welche Abrasivkörper aus Diamant eingebettet sind. Das Überziehen des Stahlkerns mit der Nickelschicht erfolgt in der überwiegenden Mehrheit der Fälle per Galvanotechnik, wobei es zu einer Codeposition des Nickels und der Diamantkörner kommt. Hierzu wird eine nickelhaltige Elektrolytlösung, für gewöhnlich enthaltend Nickelsulfamat, eingesetzt. In dieser sind die Diamantkörner suspendiert. Es können sowohl natürliche als auch synthetische Diamantkörner eingesetzt werden, wobei sich natürliche Diamantkörner in der zahnärztlichen Praxis etabliert haben.

Bei derartigen Dentalinstrumenten besteht allerdings das Problem, dass die Diamantkörner während des Gebrauchs aus der Nickelschicht herausbrechen. Dies führt zu einem schnellen Verschleiss bzw. abstumpfen des Instrumentes, wodurch seine Lebensdauer stark limitiert ist. Insbesondere bei der zahnärztlichen Verwendung derartiger Instrumente besteht zudem das Problem, dass vom Arbeitsteil abgelöste Abrasivkörper oder Teile der Beschichtung in den Organismus eines Patienten gelangen können. Zudem führt ein gradueller Verschleiss des Instrumentes zu einer stetigen Veränderung dessen Charakteristik, was die Handhabung für den Zahnarzt oder Dentaltechniker erschwert.

Es ist daher die Aufgabe der vorliegenden Erfindung, die Nachteile im Stand der Technik zu überwinden.

Insbesondere ist es eine Aufgabe der vorliegenden Erfindung, ein vielfältig anwendbares Dentalinstrument zu schaffen, welches verschleissarm und einfach in der Handhabung ist. Das Instrument soll kostengünstig, und insbesondere in hoher Stückzahl, herstellbar sein.

Diese Aufgaben werden durch ein Dentalinstrument, ein Verfahren zum Beschichten eines Arbeitsteils, insbesondere zur Herstellung eines Dentalinstrumentes, sowie durch die Verwendung eines Dentalinstrumentes gelöst, welche die Merkmale in den unabhängigen Patentansprüchen aufweisen.

Das Dentalinstrument umfasst einen Schaft und ein daran anschliessendes Arbeitsteil, wobei das Arbeitsteil eine Beschichtung aufweist, in die Abrasivkörper eingebettet sind. Der mittlere Anteil der Oberfläche der Abrasivkörper, der von der Beschichtung bedeckt ist, beträgt mindestens 60%, vorzugsweise mindestens 65%, bevorzugterweise mindestens 70%. Allerdings kann dieser mittlere Anteil auch mindestens 75%, vorzugsweise mindestens 80%, bevorzugterweise mindestens 85% betragen.

Es versteht sich dabei von selbst, dass sich diese Prozentangaben nur auf Abrasivkörper beziehen, die zumindest teilweise unbedeckt sind (massgebliche Abrasivkörper). Unter dem *"mittleren Anteil der Oberfläche der Abrasivkörper, der von der Beschichtung bedeckt ist"* wird im vorliegenden Zusammenhang das arithmetische Mittel der Bedeckungsanteile über diese massgeblichen Abrasivkörper verstanden. Für einen einzelnen Abrasivkörper stellt der Bedeckungsanteil den Prozentanteil der Gesamtoberfläche dar, der von der ebenfalls das Arbeitsteil bedeckenden Beschichtung bedeckt ist.

Durch diesen hohen Grad der Einbettung der Abrasivkörper in die Beschichtung kann ein Ausbrechen derselben während des Gebrauchs reduziert werden. Dadurch kann eine höhere Langlebigkeit des Dentalinstrumentes erzielt werden. Darüber hinaus verändern sich dessen Eigenschaften deutlich weniger über seine Lebensdauer, wodurch die Handhabung vereinfacht ist.

Losgelöst vom mittleren Anteil der Oberfläche der Abrasivkörper, der von der Beschichtung bedeckt ist, kann bei einem derartigen Dentalinstrument die Beschichtung aus einer Nickellegierung bestehen, welche zusätzlich zumindest ein Element ausgewählt aus einer Liste bestehend aus Vanadium, Niob, Chrom, Molybdän, Wolfram, Mangan und Eisen enthält.

Legierungen mit einer derartigen Zusammensetzung vermeiden ebenfalls ein Ausbrechen der Abrasivkörper aus der Beschichtung. Dies kann einerseits durch eine höhere mechanische Beständigkeit erzielt werden. Allerdings kann dies auch das Resultat davon sein, dass die Abrasivkörper von der Beschichtung besser bedeckt sind. Entsprechend weist ein solches Dentalinstrument auch deutlich konstantere Charakteristika über seine Lebensdauer auf, wodurch die Handhabung vereinfacht ist.

Für den Fall, dass die Nickellegierung Wolfram enthält, kann der Anteil an Wolfram an der Legierung bei 0.1 bis 10 Gew.-%, vorzugsweise bei 1 bis 5 Gew.-%, bevorzugterweise bei 2 bis 3 Gew.-% liegen. Diese Anteile an Wolfram führen zu besonders vorteilhaften Eigenschaften in Bezug auf Verschleiss und Handhabung.

Der Schaft und das Arbeitsteil können aus einem Hartmetall, einem Metall oder einer Metalllegierung, insbesondere aus einer rostfreien Stahllegierung, bestehen. Vor allem eine rostfreie Stahllegierung ist leicht zu bearbeiten, verhältnismässig günstig und besitzt eine hohe mechanische Festigkeit sowie eine gute Korrosionsbeständigkeit.

Die Abrasivkörper können aus einem Material bestehen, welches ausgewählt ist aus einer Liste bestehend aus Diamant, Wolframcarbid und Bornitrid. Dabei handelt es sich um besonders harte Materialien, welche günstige Abrasiveigenschaften zeigen. Die Abrasivkörper können aus natürlichem und/oder synthetischem Diamant bestehen. Darüber hinaus können die Abrasivkörper aus monokristallinen und/oder polykristallinen Diamantkörnern bestehen. Es hat sich gezeigt, dass eine Mischung zweier verschiedener synthetischer Körnungen unterschiedlicher Art besonders vorteilhaft ist. Insbesondere konnte ein gutes Abrasivverhalten mit einer Mischung aus monokristallinen Diamantkörnern, welche besonders langlebig sind, und polykristallinen Diamantkörnern, welche ein besonders aggressives Schneideverhalten zeigen, erzielt werden.

Die Abrasivkörper können eine Siebkörnung nach ISO 6106-2006 von D251 (60/70), D213 (70/80), D181 (80/100), D151 (100/120), D126 (120/140), D107 (140/170), D91 (170/200), D76 (200/230), D64 (230/270), D54 (270/325), D46 (325/400) oder D252 (60/80) aufweisen, wobei D151 (100/120), D126 (120/140) und D107 (140/170) bevorzugt sind. Durch diese Körnungen kann ein besonders vorteilhaftes Abrasivverhalten erzielt werden, insbesondere hinsichtlich der Langlebigkeit des Dentalinstrumentes. Bei der Verwendung einer Mischung unterschiedlicher Sorten von Abrasivkörpern können diese auch unterschiedliche Siebkörnungen aufweisen.

Die Abrasivkörper können eine annähernd sphärische oder eine ellipsoide Geometrie haben. Durch die Verwendung von ellipsoiden Abrasivkörpern und/oder von Mischungen unterschiedlicher Körnungen kann eine höhere Packungsdichte der Abrasivkörper erreicht werden.

Das Dentalinstrument kann insbesondere rotationssymetrisch ausgebildet sein und zur rotierend-spanabhebenden Bearbeitung von Festkörpern, insbesondere von Zahnschmelz, Dentin, Keramikmaterialien, Kunststoffmaterialien, Hartmetallen, Metallen und Legierungen geeignet sein. Obwohl die vorliegende Erfindung keineswegs auf rotierende Dentalinstrumente beschränkt ist, ist die beschriebene Oberflächenbeschichtung dort, insbesondere in Bezug auf das Abrasivverhalten, besonders vorteilhaft.

Ein weiterer Aspekt der vorliegenden Erfindung betrifft ein Verfahren zum Beschichten eines Arbeitsteils zur Herstellung eines Dentalinstrumentes wie vorgehend beschrieben, umfassend die Schritte:
- Bereitstellen eines Arbeitsteils;
- Bereitstellen einer Elektrolytlösung, in welcher Abrasivkörper suspendiert sind:
- Eintauchen des Arbeitsteils in die Elektrolytlösung;
- Galvanisches Abscheiden einer Beschichtung auf dem Arbeitsteil, derart dass die Abrasivkörper derart dass die Abrasivkörper in die Beschichtung eingebettet werden.

In der Elektrolytlösung ist ein Nickelsalz und ein Salz eines Elementes ausgewählt aus einer Liste bestehend aus Vanadium, Niob, Chrom, Molybdän, Wolfram, Mangan und Eisen gelöst. Die Abrasivkörper können in Bezug auf das beschriebene Verfahren die gleichen Merkmale haben wie vorgängig in Bezug auf das Dentalinstrument beschrieben.

Durch das besagte Verfahren können Dentalinstrumente hergestellt werden, bei denen die Einbettung der Abrasivkörper in die galvanisch abgeschiedene Schicht deutlich verbessert ist. Dennoch kommt es nicht zu einem Überdecken der Abrasivkörper mit einer übermässig dicken Nickelschicht, wie es beispielsweise bei mit Nickel vorbeschichteten Abrasivkörpern aus Diamant vorkommt. Da die mit dem oben beschriebenen Verfahren erzeugten Nickellegierungen härter sind als eine reguläre Nickelbeschichtung, kann ein robusterer Verbund mit den Abrasivkörpern erzielt werden. Entsprechende Dentalinstrumente haben besonders vorteilhafte Eigenschaften, insbesondere in Bezug auf Langlebigkeit und Abrasivverhalten.

In der Elektrolytlösung können ein Nickelsalz, vorzugsweise Nickelsulfamat, Nickelsulfat oder Nickelchlorid, und Natriumpolywolframat gelöst sein. Der pH der Elektrolytlösung kann kleiner als 7, vorzugsweise kleiner als 6, bevorzugterweise kleiner als 5, sein. Mit einer derartigen Elektrolytlösung lassen sich Dentalinstrumente mit besonders vorteilhaften Eigenschaften herstellen, wie sie vorgängig bereits beschrieben wurden. Darüber hinaus sind derartige Elektrolytlösungen zum wiederholten Einsatz geeignet, wodurch die Herstellungskosten der Dentalinstrumente reduziert werden können.

Ein weiterer Aspekt der vorliegenden Erfindung betrifft die Verwendung eines vorgängig beschriebenen Dentalinstrumentes zur rotierend-spanabhebenden Bearbeitung von Festkörpern außerhalb des menschlichen Körpers, insbesondere von Keramikmaterialien, Kunststoffmaterialien, Hartmetallen, Metallen und Legierungen.

Weitere Vorteile und Einzelmerkmale der Erfindung ergeben sich aus der nachfolgenden Beschreibung eines Ausführungsbeispiels und aus den Abbildungen.

Es zeigen:
- Figuren 1 und 2:: Mikroskopische Aufnahme des Arbeitsteils eines Dentalinstrumentes aus dem Stand der Technik;
- Figuren 3 und 4:: Mikroskopische Aufnahme des Arbeitsteils eines erfindungsgemässen Dentalinstrumentes.

In der nachfolgenden Tabelle ist ein erfindungsgemässes Verfahren zum Beschichten eines Arbeitsteils zur Herstellung eines oben beschriebenen Dentalinstrumentes einem Prozess aus dem Stand der Technik gegenübergestellt. Während der Elektrolyt im Stand der Technik auf Nickelsulfamat basiert, ist ihm im erfindungsgemässen Verfahren zusätzlich Natriumpolywolframat zugesetzt. Dies führt dazu, dass die galvanisch abgeschiedene Schicht neben Nickel ca. 2-3 Gew.-% Wolfram enthält. Darüber hinaus wurden beim Verfahren aus dem Stand der Technik natürliche Diamantkörner im Elektrolyten suspendiert. Im erfindungsgemässen Verfahren wurde hingegen eine Kunstdiamantmischung mit monokristallinen (widerstandsfähig) und polykristallinen (schnittfreudig) Diamantkörnern eingesetzt. Neben den verbesserten Eigenschaften des mit dem erfindungsgemässen Verfahren hergestellten Dentalinstrumentes hat der Wolfram enthaltende Elektrolyt zusätzlich den Vorteil, dass er zur mehrfachen Verwendung geeignet ist, wodurch die Herstellungskosten eines erfindungsgemässen Dentalinstrumentes gesenkt werden können.

| **Parameter** | **Stand der Technik** | **Erfindung** |
|---|---|---|
| | | |
| pH-Wert | 3,5 - 4,3 opt. 4,0 | 3,5 - 4,3 opt. 4,0 |
| Dichte | 26-29 Bè | 26-29 Bè |
| Temperatur | 50 ± 5°C | 50 ± 5°C |
| Nickel* | 60-100 g/l | 40-60 g/l |
| Wolfram** | 0 | 1-10 g/l |
| Borsäure | 40 - 45 g/l | 40 - 45 g/l |
| Natriumcitrat | 0 | 60-80 g/l |
| Nickelchlorid | 3,5 - 4,0 g/l | 3,5 - 4,0 g/l |
| Diamant | Natur | Kunstdiamantmischung mit monokristallinen und polykristallinen Diamantkörnern |
| Körnung | 100/120, 120/140, 140/170 | 100/120, 120/140, 140/170 |
| Netzmittel | 20 ml | 20 ml |
| Glänzer | 40 ml | 40 ml |
| Badvolumen | 27 L | 27 L |

| | | |
|---|---|---|
| * Gerechnet als Metall; Eingesetzt als Nickelsulfamat ** Gerechnet als Metall; Eingesetzt als Natriumpolywolframat Monohydrat | | |

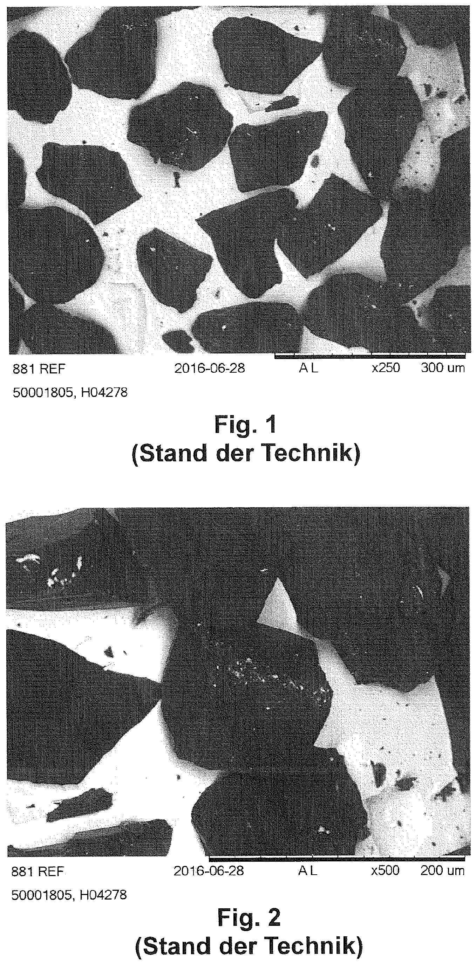

Die Figuren 1 und 2 zeigen mikroskopische Aufnahmen in 250- und 500-facher Vergrösserung eines Dentalinstrumentes aus dem Stand der Technik. Es ist zu erkennen, dass die Einbettung der Abrasivkörper aus Diamant in der galvanischen Nickelbeschichtung eher unzureichend ist. Entsprechend kann es zu einem Ausbrechen der Diamantkörner während der Verwendung, und somit zu einem raschen Verschleiss des Instrumentes, kommen.

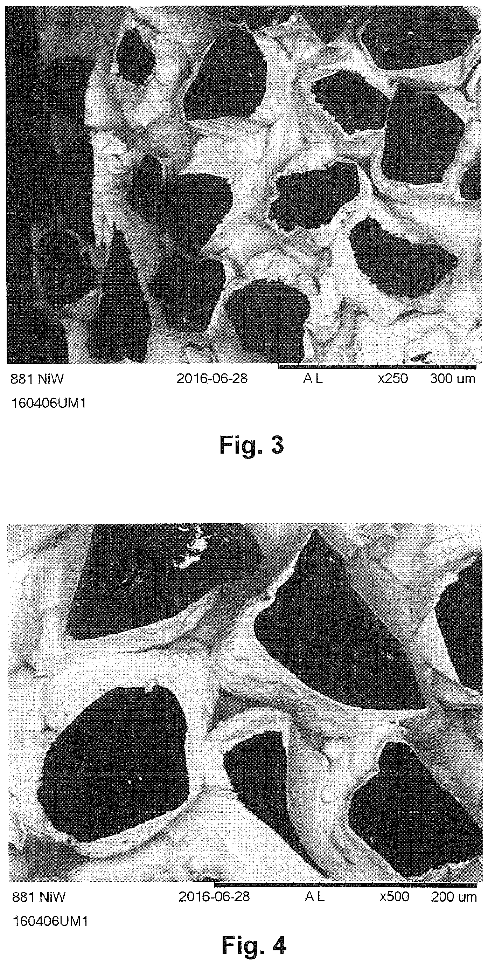

Die Figuren 3 und 4 zeigen mikroskopische Aufnahmen in 250- und 500-facher Vergrösserung eines erfindungsgemässen Dentalinstrumentes. Es ist zu erkennen, dass die Einbettung der Diamantkörner in die Metallmatrix deutlich besser ist. So liegt der mittlere Anteil der Oberfläche der Abrasivkörper, der von der Beschichtung bedeckt ist, bei über 60%. Dadurch sind die Diamantkörner deutlich besser in der Metallmatrix gehalten. Sie brechen bei Gebrauch des Dentalinstrumentes deutlich weniger aus, wodurch dieses einen langsameren Verschleiss und konstante Charakteristika über seine Lebensdauer zeigt. Ferner kann mit der Mischung zweier synthetischer Diamantkörner ein vorteilhaftes Abrasivverhalten erzielt werden. Bei einem Diamantkorn handelt es sich um einen monokristallinen Diamantpartikel, der eine hohe Standfestigkeit aufweist. Beim anderen handelt es sich um einen multikristallinen Diamantpartikel, der sich durch ein deutlich aggressiveres Schneideverhalten und Selbstschärfeeigenschaften auszeichnet.

## Patentansprüche

1. Dentalinstrument umfassend einen Schaft und ein daran anschliessendes Arbeitsteil, wobei das Arbeitsteil eine Beschichtung aufweist, in die Abrasivkörper eingebettet sind, **dadurch gekennzeichnet dass** die Beschichtung aus einer Nickellegierung besteht, welche zusätzlich zumindest ein Element ausgewählt aus einer Liste bestehend aus Vanadium, Niob, Chrom, Molybdän, Wolfram, Mangan und Eisen enthält.

2. Dentalinstrument nach Anspruch 1, wobei die Nickellegierung Wolfram enthält und der Anteil an Wolfram an der Legierung bei 0.1 bis 10 Gew.-%, vorzugsweise 1 bis 5 Gew.-%, bevorzugterweise bei 2 bis 3 Gew.-%, liegt.

3. Dentalinstrument nach einem der Ansprüche 1 bis 2, wobei der Schaft und das Arbeitsteil aus einem Hartmetall, einem Metall oder einer Metalllegierung, insbesondere einer rostfreien Stahllegierung, bestehen.

4. Dentalinstrument nach einem der Ansprüche 1 bis 3, wobei die Abrasivkörper aus einem Material bestehen, welches ausgewählt ist aus einer Liste bestehend aus Diamant, Wolframcarbid, Bornitrid, Korund und Korundvarietäten, insbesondere Rubin.

5. Dentalinstrument nach Anspruch 4, wobei die Abrasivkörper aus natürlichem und/oder synthetischem Diamant bestehen.

6. Dentalinstrument nach Anspruch 4, wobei die Abrasivkörper aus monokristallinem und/oder polykristallinem Diamant bestehen.

7. Dentalinstrument nach einem der Ansprüche 1 bis 6, wobei die Abrasivkörper eine Siebkörnung nach ISO 6106-2006 von D251 (60/70), D213 (70/80), D181 (80/100), D151 (100/120), D126 (120/140), D107 (140/170), D91 (170/200), D76 (200/230), D64 (230/270), D54 (270/325), D46 (325/400) oder D252 (60/80) aufweisen, wobei D151 (100/120), D126 (120/140) und D107 (140/170) bevorzugt sind.

8. Dentalinstrument nach einem der Ansprüche 1 bis 7, insbesondere rotationssymmetrisch ausgebildet, zur rotierend-spanabhebenden Bearbeitung von Festkörpern, insbesondere von Zahnschmelz, Dentin, Keramikmaterialien, Kunststoffmaterialien, Hartmetallen, Metallen und Legierungen.

9. Verfahren zum Beschichten eines Arbeitsteils zur Herstellung eines Dentalinstrumentes nach einem der Ansprüche 1 bis 8, umfassend die Schritte:
- Bereitstellen des Arbeitsteils;
- Bereitstellen einer Elektrolytlösung, in welcher Abrasivkörper suspendiert sind;
- Eintauchen des Arbeitsteils in die Elektrolytlösung;
- Galvanisches Abscheiden einer Beschichtung auf dem Arbeitsteil, derart dass die Abrasivkörper in die Beschichtung eingebettet werden,
**dadurch gekennzeichnet, dass** in der Elektrolytlösung ein Nickelsalz und ein Salz eines Elementes ausgewählt aus einer Liste bestehend aus Vanadium, Niob, Chrom, Molybdän, Wolfram, Mangan und Eisen gelöst sind.

10. Verfahren nach Anspruch 9, wobei in der Elektrolytlösung ein Nickelsalz, vorzugsweise Nickelsulfamat, Nickelsulfat oder Nickelchlorid, und Natriumpolywolframat gelöst sind.

11. Verfahren nach einem der Ansprüche 9 oder 10, wobei der pH der Elektrolytlösung kleiner als 7, vorzugsweise kleiner als 6, bevorzugterweise kleiner als 5, ist.

12. Verwendung eines Dentalinstrumentes nach einem der Ansprüche 1 bis 8 ex vivo zur rotierend-spanabhebenden Bearbeitung von Festkörpern, insbesondere von Keramikmaterialien, Kunststoffmaterialien, Hartmetallen, Metallen und Legierungen.

## Claims

1. Dental instrument comprising a shaft and a working part adjoined thereto, with the working part having a coating in which abrasive bodies are embedded, **characterized in that** the coating consists of a nickel alloy which additionally contains at least one element selected from the group consisting of vanadium, niobium, chromium, molybdenum, tungsten, manganese, iron and cobalt.

2. Dental instrument according to Claim 1, wherein the nickel alloy contains tungsten and the proportion of tungsten in the alloy is from 0.1 to 10% by weight, preferably from 1 to 5% by weight, most preferably from 2 to 3% by weight.

3. Dental instrument according to any of Claims 1 to 2, wherein the shaft and the working part consist of a hard metal, a metal or a metal alloy, in particular a stainless steel alloy.

4. Dental instrument according to any of Claims 1 to 3, wherein the abrasive bodies consist of a material selected from the group consisting of diamond, tungsten carbide, boron nitride, corundum and corundum varieties, in particular ruby.

5. Dental instrument according to Claim 4, wherein the abrasive bodies consist of natural and/or synthetic diamond.

6. Dental instrument according to Claim 4, wherein the abrasive bodies consist of monocrystalline and/or polycrystalline diamond.

7. Dental instrument according to any of Claims 1 to 6, wherein the abrasive bodies have a sieved grain size in accordance with ISO 6106-2006 of D251 (60/70), D213 (70/80), D181 (80/100), D151 (100/120), D126 (120/140), D107 (140/170), D91 (170/200), D76 (200/230), D64 (230/270), D54 (270/325), D46 (325/400) or D252 (60/80), with preference being given to D151 (100/120), D126 (120/140) and D107 (140/170).

8. Dental instrument according to any of Claims 1 to 7, in particular having a rotationally symmetric configuration, for rotational cutting machining of solid bodies, in particular of dental enamel, dentine, ceramic materials, polymer materials, hard metals, metals and alloys.

9. Process for coating a working part for producing a dental instrument according to any of Claims 1 to 8, which comprises the steps:
- provision of a working part;
- provision of an electrolyte solution in which abrasive bodies are suspended;
- dipping of the working part into the electrolyte solution;
- electrochemical deposition of a coating on the working part in such a way that the abrasive bodies are embedded in the coating,
**characterized in that** a nickel salt and a salt of an element selected from the group consisting of vanadium, niobium, chromium, molybdenum, tungsten, manganese, iron and cobalt are dissolved in the electrolyte solution.

10. Process according to Claim 9, wherein a nickel salt, preferably nickel sulphamate, nickel sulphate or nickel chloride, and sodium polytungstate are dissolved in the electrolyte solution.

11. Process according to either Claim 9 or 10, wherein the pH of the electrolyte solution is less than 7, preferably less than 6, most preferably less than 5.

12. Use of a dental instrument according to any of Claims 1 to 8 ex vivo for rotational cutting machining of solid bodies, in particular of dental enamel, dentine, ceramic materials, polymer materials, hard metals, metals and alloys.

## Revendications

1. Instrument dentaire comprenant une tige et une partie de travail qui s'y raccorde, la partie de travail présentant un revêtement dans lequel sont noyés des corps abrasifs, **caractérisé en ce que** le revêtement est constitué d'un alliage de nickel qui contient en outre au moins un élément choisi dans le groupe constitué par le vanadium, le niobium, le chrome, le molybdène, le tungstène, le manganèse, le fer et le cobalt.

2. Instrument dentaire selon la revendication 1, dans lequel l'alliage de nickel contient du tungstène et la proportion de tungstène dans l'alliage est de 0,1 à 10% en poids, de préférence de 1 à 5% en poids, tout particulièrement de 2 à 3% en poids.

3. Instrument dentaire selon l'une des revendications 1 à 2, dans lequel la tige et la partie travaillante sont constituées d'un métal dur, d'un métal ou d'un alliage métallique, en particulier d'un alliage d'acier inoxydable.

4. Instrument dentaire selon l'une des revendications 1 à 3, dans lequel les corps abrasifs sont constitués d'un matériau choisi dans le groupe constitué par le diamant, le carbure de tungstène, le nitrure de bore, le corindon et les variétés de corindon, en particulier le rubis.

5. Instrument dentaire selon la revendication 4, dans lequel les corps abrasifs sont constitués de diamant naturel et/ou synthétique.

6. Instrument dentaire selon la revendication 4, dans lequel les corps abrasifs sont constitués de diamant monocristallin et/ou polycristallin.

7. Instrument dentaire selon l'une des revendications 1 à 6, dans lequel les corps abrasifs ont une taille de grain tamisée conformément à la norme ISO 6106-2006 de D251 (60/70), D213 (70/80), D181 (80/100), D151 (100/120), D126 (120/140), D107 (140/170), D91 (170/200), D76 (200/230), D64 (230/270), D54 (270/325), D46 (325/400) ou D252 (60/80), la préférence étant accordée à D151 (100/120), D126 (120/140) et D107 (140/170).

8. Instrument dentaire selon l'une des revendications 1 à 7, en particulier ayant une configuration à symétrie de révolution, pour l'usinage par enlèvement de copeaux par rotation de corps solides, en particulier d'émail dentaire, de dentine, de matériaux céramiques, de matériaux polymères, de métaux durs, de métaux et d'alliages.

9. Procédé de revêtement d'une pièce de travail pour la fabrication d'un instrument dentaire selon l'une des revendications 1 à 8, qui comprend les étapes suivantes:
- fourniture d'une pièce de travail ;
- fourniture d'une solution d'électrolyte dans laquelle des corps abrasifs sont en suspension ;
- immersion de la pièce de travail dans la solution d'électrolyte ;
- dépôt électrochimique d'un revêtement sur la pièce de travail de telle sorte que les corps abrasifs soient noyés dans le revêtement,
**caractérisé en ce qu'**un sel de nickel et un sel d'un élément choisi dans le groupe constitué par le vanadium, le niobium, le chrome, le molybdène, le tungstène, le manganèse, le fer et le cobalt sont dissous dans la solution d'électrolyte.

10. Procédé selon la revendication 9, dans lequel un sel de nickel, de préférence du sulfamate de nickel, du sulfate de nickel ou du chlorure de nickel, et du polytungstate de sodium sont dissous dans la solution d'électrolyte.

11. Procédé selon la revendication 9 ou 10, dans lequel le pH de la solution d'électrolyte est inférieur à 7, de préférence inférieur à 6, plus préférablement inférieur à 5.

12. Utilisation d'un instrument dentaire selon l'une des revendications 1 à 8 ex vivo pour l'usinage par enlèvement de copeaux par rotation de corps solides, en particulier d'émail dentaire, de dentine, de matériaux céramiques, de matériaux polymères, de métaux durs, de métaux et d'alliages.
